# EUROPEAN PATENT APPLICATION

(11) **EP 4 478 698 A1**
(43) Date of publication of application: **18.12.2024**
(21) Application number: 24179781.0
(22) Date of filing: 04.06.2024
(51) Int. Cl.: H04N 1/60

(54) **IMAGE FORMING APPARATUS, CONTROL METHOD THEREFOR, AND PROGRAM**

(30) Priority: 14.06.2023 JP 2023097909
(71) Applicant: CANON KABUSHIKI KAISHA, Tokyo 146-8501 (JP)
(72) Inventor: YASUZAKI, Koji, Tokyo (JP)
(74) Representative: WESER & Kollegen Patentanwälte PartmbB

(57) **Abstract**

An image forming apparatus comprises a first obtaining means configured to obtain first color values of a base color of a print medium by reading the print medium; a second obtaining means configured to obtain second color values different from the first color values based on the first color values; and a print means configured to print a mark of the second color values on the print medium.

## Description

### BACKGROUND

### Technical Field

The present disclosure relates to an image forming apparatus, a control method therefor, and program.

### Description of the Related Art

Conventionally, as a method of specifying a print image position, there is provided a method of controlling specification of a print position by printing a dedicated detection pattern and detecting the printed detection pattern. For example, as described in Japanese Patent Laid-Open No. 2010-41673, in an image processing system for detecting the position of an area detection mark from a handwritten original sheet including a base image representing composition target image data to be composited with a handwritten image drawn by a user and the area detection mark for detecting the area of the handwritten image, there is proposed a control method of specifying a pixel of the color of the area detection mark based on whether color difference information and luminance information obtained by reading, by a scanner, a region including the area detection mark become predetermined amounts, and detecting the position of the area detection mark.

### SUMMARY

According to one aspect of the present disclosure, there is provided an image forming apparatus as specified in claims 1 to 9.

According to another aspect of the present disclosure, there is provided a control method as specified in claim 10.

According to another aspect of the present disclosure, there is provided a program as specified in claim 11.

Further features of the present disclosure will become apparent from the following description of exemplary embodiments (with reference to the attached drawings).

### BRIEF DESCRIPTION OF THE DRAWINGS

Fig. 1 is a view showing the apparatus arrangement of an image forming system according to an embodiment;
Fig. 2 is a block diagram showing the functions of the image forming system according to the embodiment;
Fig. 3A is a flowchart of control of scanning a base color, determining the color of the scanned base color, deciding the color of a detection pattern to be printed, and printing the detection pattern in the decided color according to the embodiment;
Fig. 3B is a flowchart of control of scanning a base color, determining the color of the scanned base color, deciding the color of a detection pattern to be printed, and printing the detection pattern in the decided color according to the embodiment;
Fig. 3C is a flowchart of control of scanning a base color, determining the color of the scanned base color, deciding the color of a detection pattern to be printed, and printing the detection pattern in the decided color according to the embodiment;
Fig. 4 is a flowchart of control of scanning a base color, determining the color of the scanned base color, deciding the color of a detection pattern to be printed, and printing the detection pattern in the decided color, which is different from the explanation of Figs. 3A to 3C, according to an embodiment;
Fig. 5 is a flowchart illustrating a method of controlling whether to execute printing by scanning a base color, determining the color of the scanned base color, and setting white as a background color according to an embodiment;
Fig. 6A is a view showing a method of printing a detection pattern at a specific position according to an embodiment;
Fig. 6B is a view showing a method of printing a detection pattern at a specific position according to the embodiment;
Fig. 6C is a view showing a method of printing a detection pattern at a specific position according to the embodiment;
Fig. 6D is a view showing a method of printing a detection pattern at a specific position according to the embodiment;
Fig. 6E is a view showing a method of printing a detection pattern at a specific position according to the embodiment;
Fig. 7 is a flowchart illustrating a method of controlling whether to print a detection pattern by convex ink by scanning a base color, determining the color of the scanned base color, and determining whether a sheet is printable by the convex ink according to an embodiment;
Fig. 8 is a view showing a method of printing, at a specific position, the detection pattern printed using the convex ink according to the embodiment; and
Fig. 9 is a view showing the relationship between an RGB color mode when scanning a base and a CMYK color mode when printing a detection pattern based on the base color according to the embodiment.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

In the implementation method of Japanese Patent Laid-Open No. 2010-41673, based on whether color difference information and luminance information obtained by reading, by a scanner, a region including an area detection mark become predetermined amounts, a pixel of the color of the area detection mark is specified and the position of the area detection mark is detected. If the color difference and luminance difference between the base color of a sheet and the area detection mark are not equal to or larger than the predetermined amounts, it is impossible to detect the detection mark.

The present disclosure has been made to solve the above problem, and provides an image forming apparatus that can detect a detection pattern more reliably, a control method therefor, and a non-transitory computer-readable storage medium storing a computer program.

### [First Embodiment]

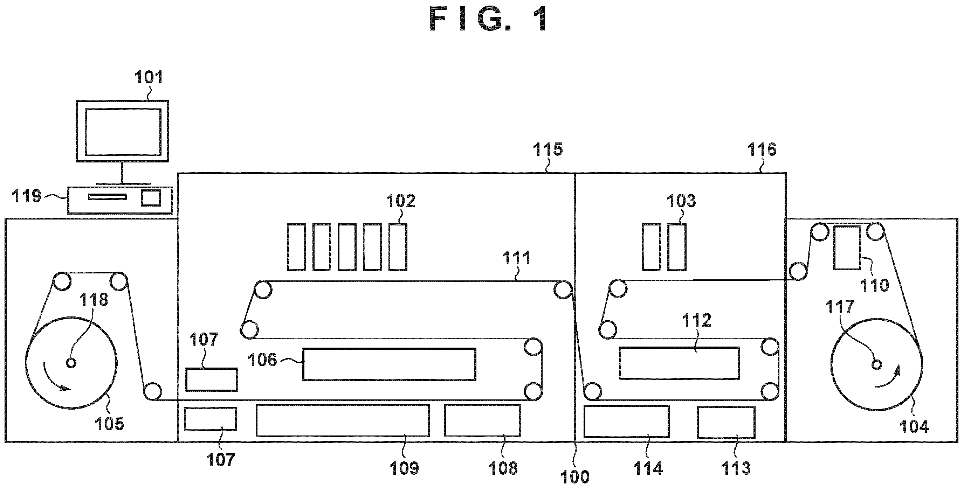

Fig. 1 shows an example of the arrangement of an image forming apparatus 100 according to the embodiment. The image forming apparatus 100 is an apparatus that forms an image on a continuous sheet (to be referred to as a roll sheet hereinafter) 111 used in this embodiment, on which an image can be formed continuously. In this embodiment, the image forming apparatus 100 includes a paper feed device 104 that conveys the roll sheet 111, a print unit 116 that executes spot color printing, a print unit 115 that executes basic color printing, a discharge device 105 that winds the roll sheet 111, a UI operation panel 101, and a control PC 119.

The paper feed device 104 is a device that supplies the roll sheet 111 to the print unit 116 or 115. The paper feed device 104 rotates the sheet tube of the roll sheet 111 about a rotation shaft 117 to convey the roll sheet 111 wound onto the sheet tube toward the print unit 116 or 115 via a plurality of rollers (conveyance rollers, paper feed rollers, and the like) at a constant speed.

The discharge device 105 is a device that winds, in a roll, the roll sheet 111 conveyed from the print unit 115 via the print units 115 and 116 around the sheet tube. For example, the discharge device 105 holds the roll sheet 111 wound in a roll around the sheet tube of a rotation shaft 118. The discharge device 105 is a device that rotates about the rotation shaft 118 and winds the conveyed roll sheet 111 as a product around the sheet tube of the rotation shaft 118 at a constant speed via a plurality of rollers (for example, conveyance rollers and discharge roller). Before the start of printing, the roll sheet 111 is passed from the paper feed device 104 to the discharge device 105 via the print units 115 and 116. The leading edge of the roll sheet 111 is passed over an oblique light correction device 110 between the paper feed device 104 and the discharge device 105. Next, the roll sheet 111 is passed under a print device 103 of the print unit 116.

In this embodiment, the print device 103 is a device that executes printing using ink of a spot color (for example, white) other than print basic colors (CMYK) of cyan (C), magenta (M), yellow (Y), and black (K). The roll sheet 111 is passed under the drying device 112, and passed over cooling devices 113 and 114. Next, the roll sheet 111 is passed under a print device 102 of the print unit 115 and under a drying device 106, and passed over cooling devices 108 and 109.

In this embodiment, the print device 102 executes printing using inks of print basic colors (CMYK). The roll sheet 111 is passed through a scanner device 107 and then conveyed to the discharge device 105. After the roll sheet 111 is passed through the image forming apparatus 100, the user inputs a print job to the control PC 119 of the image forming apparatus 100. After inputting the print job, when the user presses a print start button on the UI operation panel 101, the image forming apparatus 100 starts printing. The image forming apparatus 100 reads a printed image by the scanner device 107, and analyzes the read image by the control PC 119, thereby inspecting whether a printed product includes an error.

Next, the control arrangement of an image forming system 200 will be described in detail. The image forming system 200 includes the control PC 119 for controlling the print device 102, and the units of the print device 102.

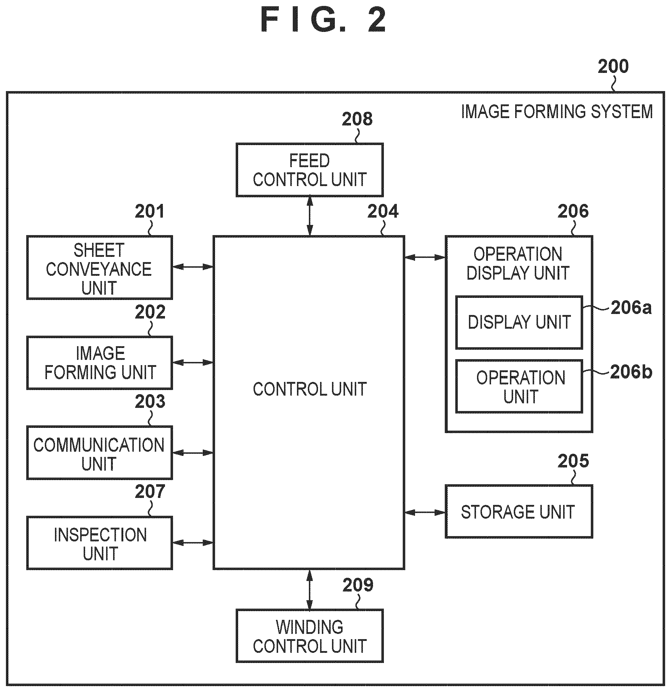

Fig. 2 is a functional block diagram of the image forming system 200 showing the control arrangement of the image forming apparatus 100. The image forming apparatus 100 is controlled by the respective functions of the image forming system 200. As shown in Fig. 2, the image forming system 200 includes, for example, a sheet conveyance unit 201, an image forming unit 202, a communication unit 203, a control unit 204, a storage unit 205, an operation display unit 206, an inspection unit 207, a feed control unit 208, and a winding control unit 209.

The sheet conveyance unit 201 is a conveyance mechanism of the roll sheet 111 in the image forming apparatus 100. For example, the sheet conveyance unit 201 uses a plurality of rollers to convey, to the image forming unit 202, the roll sheet 111 conveyed from the feed control unit 208, and convey, to the winding control unit 209, the roll sheet 111 having passed through the image forming unit 202. The roll sheet is an example of a print medium.

Based on data of a print job for which an output instruction is received, the image forming unit 202 forms an image ("image" includes characters in the following description) on the roll sheet 111 supplied from the feed control unit 208.

The communication unit 203 is formed by a communication control card such as a Local Area Network (LAN) card. The communication unit 203 transmits/receives various kinds of data to/from an external apparatus (for example, a personal computer) connected to a communication network such as a LAN or a Wide Area Network (WAN).

The control unit 204 includes, for example, a processor such as a Central Processing Unit (CPU) and a main storage device such as a Random Access Memory (RAM). The CPU of the control unit 204 reads out various kinds of programs such as a system program and processing program stored in the storage unit 205, deploys them in the RAM, and executes various kinds of processes in accordance with the deployed programs. For example, the control unit 204 can perform image forming processing of executing a print job of forming an image on a print medium in accordance with a user instruction. The storage unit 205 is formed by, for example, a nonvolatile semiconductor memory (so-called flash memory), a Hard Disk Drive (HDD), or the like. The storage unit 205 stores various kinds of programs including a system program and processing program to be executed by the control unit 204, and various kinds of data necessary to execute these programs.

For example, the control unit 204 executes a program for setting the color values of a detection pattern to obtain color values (first color values) obtained by converting, into numerical values, the base color of a print medium such as a roll sheet on which the detection pattern detected by the scanner device 107 is printed. The color values are, for example, RGB values obtained by converting the tone levels of red, green, and blue into numerical values. The control unit 204 sets the color values (second color values) of the color of the detection pattern based on the color values of the base of the print medium. In the following description, "set color A" means "set the color values of color A".

The operation display unit 206 is formed by, for example, a Liquid Crystal Display (LCD) with a touch panel, and includes a display unit 206a and an operation unit 206b. The display unit 206a displays various kinds of information on a display screen in accordance with a display control signal input from the control unit 204. The operation unit 206b includes various kinds of operation keys including a ten-key pad and a start key, accepts various kinds of input operations from the user, and outputs an operation signal to the control unit 204. When executing a job, the operation display unit 206 is used to, for example, set job information. The user can arbitrarily set, by the operation display unit 206, all or some of conditions of a print medium to be used, print speed information, the number of print sheets, the number of copies, a print length, a print weight, a printing diameter, and the like.

Next, an example of an operation in a case where image forming processing is performed on the roll sheet 111 in the image forming system 200 will be described. First, in an external apparatus, the user creates data of a print job, performs print setting of the print job and number setting of the delivery rolls, and transmits information concerning the settings to the image forming system 200 via the communication network. The control unit 204 accepts, via the communication unit 203, the data of the print job transmitted from the external apparatus, and a job ticket including the print setting information of the print job and the number setting information of the delivery rolls.

The inspection unit 207 determines whether the printed image has been printed without any discharge failure. The inspection unit 207 determines whether a print image obtained by reading, by the scanner device 107, the detection pattern printed for discharge failure detection includes no discharge failure. If a discharge failure is detected, the inspection unit 207 stops the image forming apparatus 100. As the detection method, various methods such as a method of printing a detection pattern and reading it by a scanner, a method of inspecting a print image by directly reading it by a camera or a scanner, and a method of monitoring the discharge status of a nozzle may be applied. In this embodiment, by the method of printing a detection pattern and reading it by the scanner device 107, the inspection unit 207 determines whether a discharge failure has occurred.

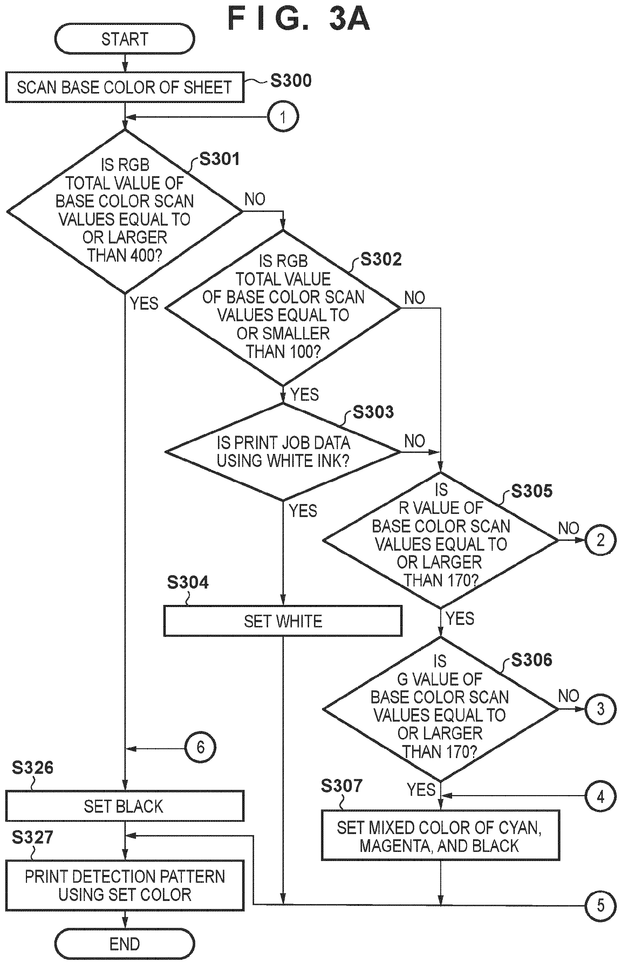

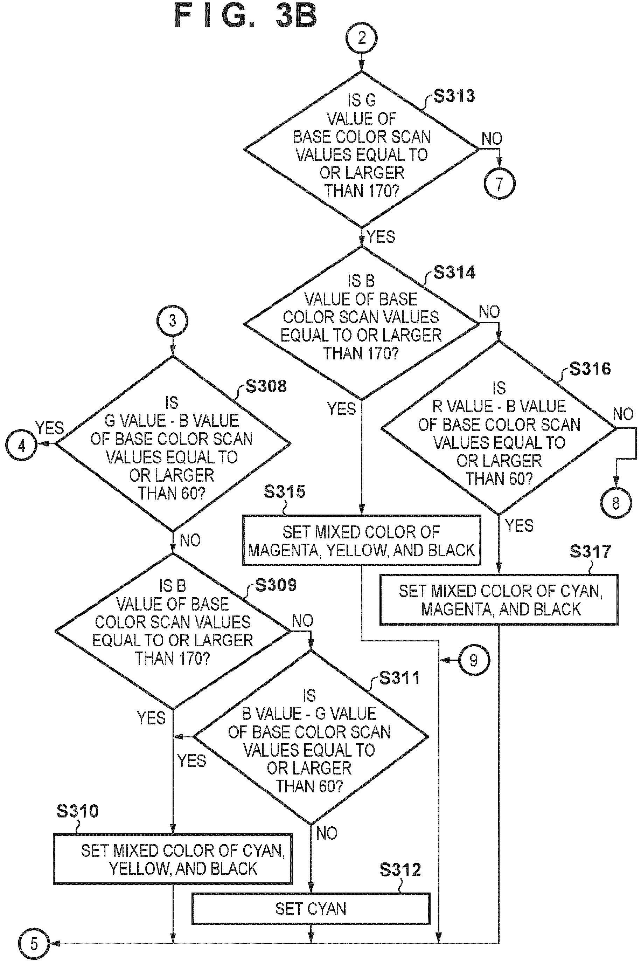

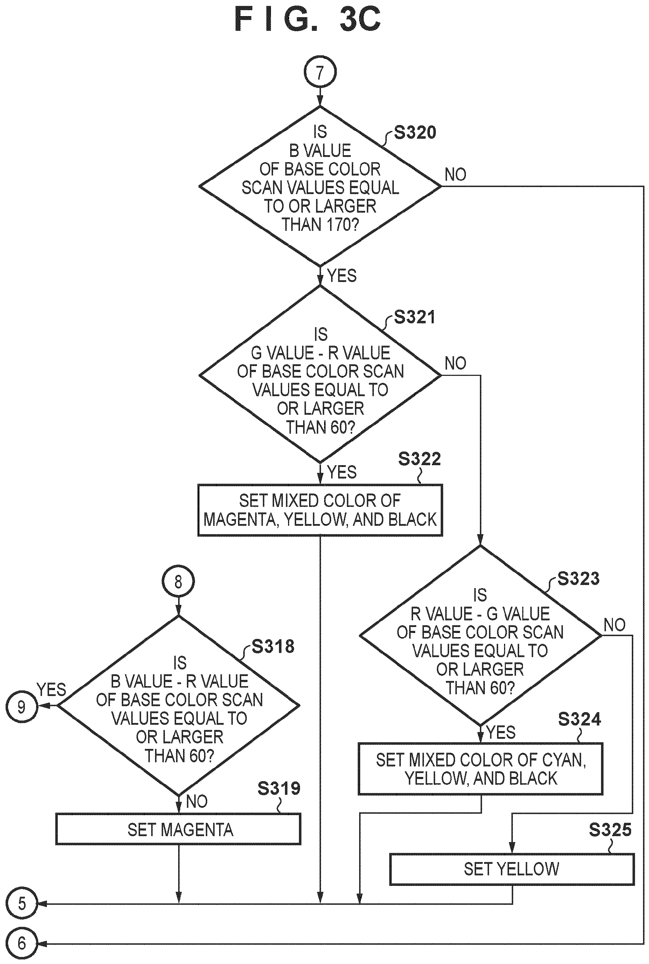

Figs. 3A to 3C is a flowchart of control of deciding, based on RGB values (to be also referred to as base color scan values) representing the tone levels of red, green, and blue of the base of the print medium scanned by the scanner device 107, the color values of a detection pattern to be printed, and printing the detection pattern of the decided color values. In this embodiment, assume that when printing on a roll sheet, the print medium is preset at the position of the scanner device 107. However, not only in a case of a roll sheet but also in a case of a cut sheet, this embodiment may be applied to various methods such as conveyance of only one sheet, a scan by a manual feed, and user setting. A print medium is not limited to the roll sheet described in this embodiment.

In step S300, the inspection unit 207 uses the scanner device 107 to scan the color (base color) of the base of the print medium, and outputs base color scan values obtained by the scan to the control unit 204. The base color scan values are examples of color values obtained by converting the base color into numerical values. This embodiment will describe a case where the base color scan values are a set of three color values of the color value (R value) of red (R), the color value (G value) of green (G), and the color value (B value) of blue (B). However, the base color scan values may be a set of color values of color components other than R, G, and B.

In step S301, the control unit 204 determines whether the RGB total value of the base color scan values obtained from the inspection unit 207 is equal to or larger than a threshold (400 in this case). The maximum values (the maximum values of the color values of R, G, and B) of the scanned RGB values are (R : G : B) = (255 : 255 : 255), and the minimum values (the minimum values of the color values of R, G, and B) are (R : G : B) = (0 : 0 : 0). The RGB total value indicates a value obtained by adding all the color values of R, G, and B. For example, in a case where (R : G : B) = (255 : 155 : 0), (R : G : B) = (100 : 200 : 150), or (R : G : B) = (133 : 134 : 133), it is determined that the RGB total value exceeds 400. R, G, and B may have any color values as long as the RGB total value exceeds 400.

If the control unit 204 determines in step S301 that the RGB total value is equal to or larger than 400, that is, the threshold, the control unit 204 sets, in step S326, black as the color of a detection pattern. In this way, by determining first whether to set black that is assumed to be the color of a detection pattern most often, the control unit 204 can omit determination processing concerning other colors, thereby reducing the processing load. If the control unit 204 determines in step S301 that the RGB total value is smaller than 400, that is, the threshold, the control unit 204 determines in step S302 whether the RGB total value of the base color scan values is equal to or smaller than 100. For example, in a case where (R : G : B) = (80 : 19 : 0), (R : G : B) = (100 : 0 : 0), or (R : G : B) = (33 : 34 : 33), it is determined that the RGB total value is equal to or smaller than 100. R, G, and B may have any color values as long as the RGB total value is equal to or smaller than 100.

If the control unit 204 determines in step S302 that the RGB total value is equal to or smaller than 100, the control unit 204 determines in step S303 whether a print job input by the user to the control PC 119 of the image forming apparatus 100 is data using white ink. If the control unit 204 determines in step S303 that the print job is data using white ink, the control unit 204 sets, in step S304, white as the color of a detection pattern. If the control unit 204 determines in step S302 that the RGB total value exceeds 100 or the control unit 204 determines in step S303 that the print job includes no data using white ink, the control unit 204 determines in step S305 whether the R value of the base color scan values is equal to or larger than 170.

If the control unit 204 determines in step S305 that the R value is equal to or larger than 170, the control unit 204 determines in step S306 whether the G value of the base color scan values is equal to or larger than 170. If the control unit 204 determines in step S306 that the G value is equal to or larger than 170, the control unit 204 sets, in step S307, a mixed color of cyan, magenta, and black as the color of a detection pattern. If the control unit 204 determines in step S306 that the G value is smaller than 170, the control unit 204 determines in step S308 whether G value - B value as a difference obtained by subtracting the B value from the G value of the base color scan values is equal to or larger than 60. If the control unit 204 determines in step S308 that G value - B value is equal to or larger than 60, the control unit 204 sets, in step S307, a mixed color of cyan, magenta, and black as the color of a detection pattern.

If the control unit 204 determines in step S308 that G value - B value is smaller than 60, the control unit 204 determines in step S309 whether the B value of the base color scan values is equal to or larger than 170. If the control unit 204 determines in step S309 that the B value of the base color scan values is equal to or larger than 170, the control unit 204 sets, in step S310, a mixed color of cyan, yellow, and black as the color of a detection pattern. If the control unit 204 determines in step S309 that the B value of the base color scan values is smaller than 170, the control unit 204 determines in step S311 whether B value - G value as a difference obtained by subtracting the G value from the B value of the base color scan values is equal to or larger than 60.

If the control unit 204 determines in step S311 that B value - G value of the base color scan values is equal to or larger than 60, the control unit 204 sets, in step S310, a mixed color of cyan, yellow, and black as the color of a detection pattern. If the control unit 204 determines in step S311 that B value - G value of the base color scan values is smaller than 60, the control unit 204 sets, in step S312, cyan as the color of a detection pattern. If the control unit 204 determines in step S305 that the R value is smaller than 170, the control unit 204 determines in step S313 whether the G value of the base color scan values is equal to or larger than 170. If the control unit 204 determines in step S313 that the G value is equal to or larger than 170, the control unit 204 determines in step S314 whether the B value of the base color scan value is equal to or larger than 170.

If the control unit 204 determines in step S314 that the B value is equal to or larger than 170, the control unit 204 sets, in step S315, a mixed color of magenta, yellow, and black. If the control unit 204 determines in step S314 that the B value is smaller than 170, the control unit 204 determines in step S316 whether R value - B value as a difference obtained by subtracting the B value from the R value of the base color scan values is equal to or larger than 60. If the control unit 204 determines in step S316 that R value - B value is equal to or larger than 60, the control unit 204 sets, in step S317, a mixed color of cyan, magenta, and black as the color of a detection pattern. If the control unit 204 determines in step S316 that R value - B value of the base color scan values is smaller than 60, the control unit 204 determines in step S318 whether B value - R value as a difference obtained by subtracting the R value from the B value of the base color scan values is equal to or larger than 60.

If the control unit 204 determines in step S318 that B value - R value is equal to or larger than 60, the control unit 204 sets, in step S315, a mixed color of magenta, yellow, and black as the color of a detection pattern. If the control unit 204 determines in step S318 that B value - R value is smaller than 60, the control unit 204 sets, in step S319, magenta as the color of a detection pattern. If the control unit 204 determines in step S313 that the G value is smaller than 170, the control unit 204 determines in step S320 whether the B value of the base color scan values is equal to or larger than 170. If the control unit 204 determines in step S320 that the B value is equal to or larger than 170, the control unit 204 determines in step S321 whether G value - R value as a difference obtained by subtracting the B value from the G value of the base color scan values is equal to or larger than 60.

If the control unit 204 determines in step S321 that G value - R value is equal to or larger than 60, the control unit 204 designates, in step S322, a mixed color of magenta, yellow, and black as the color of a detection pattern. If the control unit 204 determines in step S321 that G value - R value is smaller than 60, the control unit 204 determines in step S323 whether R value - G value as a difference obtained by subtracting the G value from the R value of the base color scan values is equal to or larger than 60. If the control unit 204 determines in step S323 that R value - G value is equal to or larger than 60, the control unit 204 sets, in step S324, a mixed color of cyan, yellow, and black as the color of a detection pattern. If the control unit 204 determines in step S323 that R value - G value is smaller than 60, the control unit 204 sets, in step S325, yellow as the color of a detection pattern. If the control unit 204 determines in step S320 that the B value is smaller than 170, the control unit 204 sets, in step S326, black as the color of a detection pattern. In step S327, the image forming unit 202 generates a detection pattern of the color (color values) set as the color of the detection pattern by the control unit 204, and prints the generated detection pattern on the print medium.

In a case where the set color is a mixed color, the control unit 204 decides the color values of the color components of the mixed color based on the ratio of the R, G, and B values. If, for example, the mixed color set as the color of the detection pattern is a mixed color of cyan, magenta, and black, and the base color scan values are (R : G : B) = (200 : 150 : 100), the control unit 204 decides (C : M : Y : K) = (80 : 60 : 0 : 40) as the color values of the detection pattern. Furthermore, the control unit 204 determines in step S303 whether the print job is data using white ink. However, even if the print job uses no white ink, it is possible to use white ink only for the mark. Therefore, the present invention is not limited to this embodiment, and the control unit 204 may set the color of a detection pattern to be printed using the base color scan values in accordance with the characteristics of the print medium such as the basis weight, thickness, density, fiber direction, fiber orientation, and air permeability.

### [Second Embodiment]

In the following embodiments including this embodiment, the difference from the first embodiment will be described, and the embodiments are the same as the first embodiment unless it is specifically stated otherwise.

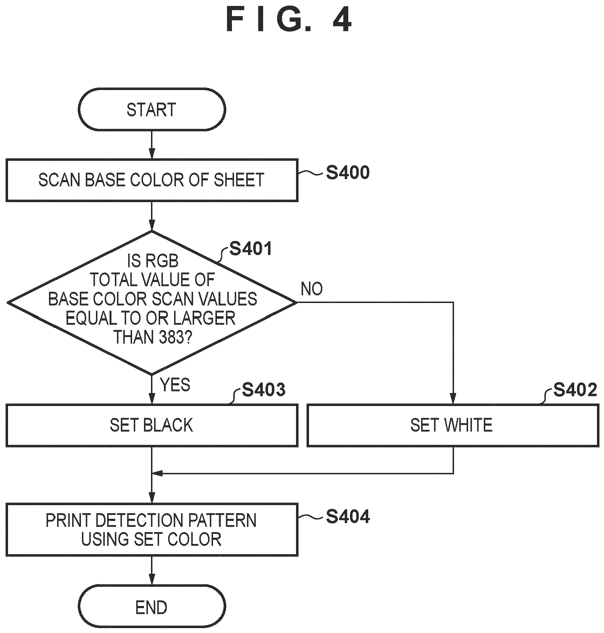

Fig. 4 is a flowchart illustrating processing different from Figs. 3A to 3C as processing of setting the color of a detection pattern. This embodiment assumes that when printing on a roll sheet, the sheet is preset at the position of a scanner device 107. However, not only in a case of a roll sheet but also in a case of a cut sheet, this embodiment may be applied to various methods such as conveyance of only one sheet, a scan by a manual feed, and user setting. A print medium is not limited to the roll sheet described in this embodiment.

In step S400, an inspection unit 207 uses the scanner device 107 to scan the base color of a print medium, and outputs base color scan values obtained by the scan to a control unit 204. In step S401, the control unit 204 determines whether the RGB total value of the base color scan values is equal to or larger than 383. If the control unit 204 determines in step S401 that the RGB total value is equal to or larger than 383, the control unit 204 sets, in step S403, black as the color of a detection pattern. If the control unit 204 determines in step S401 that the RGB total value is smaller than 383, the control unit 204 sets, in step S402, white as the color of a detection pattern. In step S404, an image forming unit 202 generates a detection pattern of the color (color values) set as the color of the detection pattern by the control unit 204, and prints the generated detection pattern on the print medium.

### [Third Embodiment]

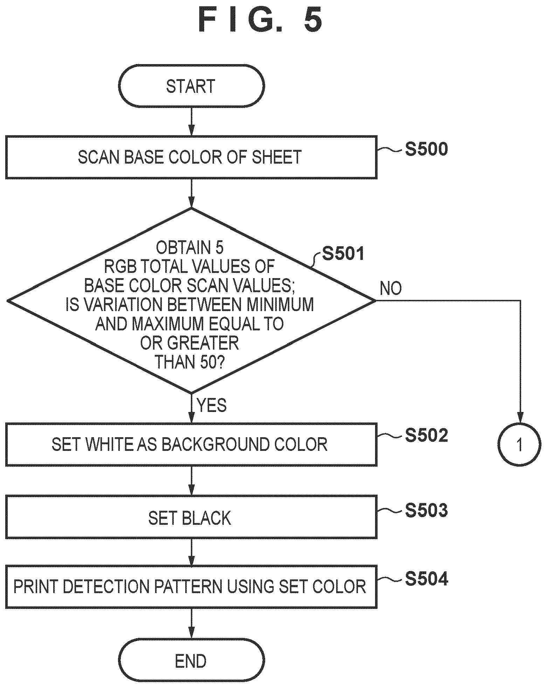

Fig. 5 is a flowchart illustrating processing different from Figs. 3A to 3C as processing of setting the color of a detection pattern. This embodiment assumes that when printing on a roll sheet, the sheet is preset at the position of a scanner device 107. However, not only in a case of a roll sheet but also in a case of a cut sheet, this embodiment may be applied to various methods such as conveyance of only one sheet, a scan by a manual feed, and user setting. A print medium is not limited to the roll sheet described in this embodiment.

In step S500, an inspection unit 207 uses the scanner device 107 to scan the base color of a print medium, and obtains the RGB total value of base color scan values obtained by the scan. This embodiment assumes that the processing of step S500 is repeated a plurality of times (five times in this example) to obtain color values the plurality of times. In step S501, a control unit 204 determines whether there is a variation equal to or greater than 50 between the maximum RGB total value and the minimum RGB total value among the RGB total values of the base color scan values obtained by the five scans. If the control unit 204 determines in step S501 that there is a variation equal to or greater than 50 between the maximum RGB total value and the minimum RGB total value, the control unit 204 sets, in step S502, white as a background color. Next, in step S503, the control unit 204 sets black as the color of a detection pattern. In step S504, an image forming unit 202 generates a detection pattern by superimposing an object of black set as the color of the detection pattern on an object of white set as the background color, and prints the generated detection pattern on the print medium. If the control unit 204 determines in step S501 that the variation between the maximum RGB total value and the minimum RGB total value is smaller than 50, the process returns to step S301 of Fig. 3A to set the color of a detection pattern.

Note that in this embodiment, the processing of step S500 is repeated five times. However, the number of times the processing of step S500 is repeated is not limited to a specific number. The number of times the processing of step S500 is repeated may be set by the user by operating an operation display unit 206.

### [Fourth Embodiment]

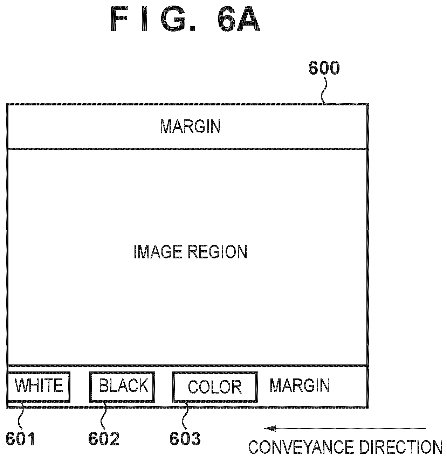

Figs. 6A to 6E are views each showing a method of printing a detection pattern at a specific position. For example, in a case where a printed product is inspected in a post-process of printing, it is impossible to determine a specific position at which a specific page is printed in a product printed on a roll sheet. In this case, a detection pattern is inserted to the top of a page and the detection pattern is detected at the time of inspection, thereby making it possible to identify the top of the page. This embodiment will describe an example of inserting a detection pattern for recognizing the top of a page at the time of printing on a roll sheet. However, for example, insertion of a detection pattern is not limited to a use case in which a detection pattern is inserted to recognize the top of a page in this embodiment, and a detection pattern may be inserted to recognize an image region. An image forming apparatus 100 may be configured to select one of the printing methods shown in Figs. 6A to 6E by the user.

More specifically, Fig. 6A is a view showing a print position in a case where the color of a detection pattern to be printed is decided based on a base color, and the detection pattern is printed at a print position preset in association with the decided color. A roll sheet 600 in a printing state includes an image region (print region) where printing is executed on the roll sheet, and includes margin regions on the left and right sides. Fig. 6A is a view showing printing for one page on the roll sheet 600. In a case where white is set as the color of a detection pattern in step S304 described in the flowchart shown in Fig. 3A, a detection pattern of white is printed at the start position of a page indicated by a position 601. In a case where black is set as the color of a detection pattern in step S326 described in the flowchart shown in Fig. 3A, a detection pattern of black is printed at a position 602.

Next, a print position of a detection pattern in a case where a mixed color or a single color is set as the color of the detection pattern in step S307, S310, S312, S315, S317, S319, S322, S324, or S325 described in the flowchart shown in Figs. 3A to 3C will be described. In a case where a mixed color or a single color is set as the color of the detection pattern, the detection pattern is printed at a position 603.

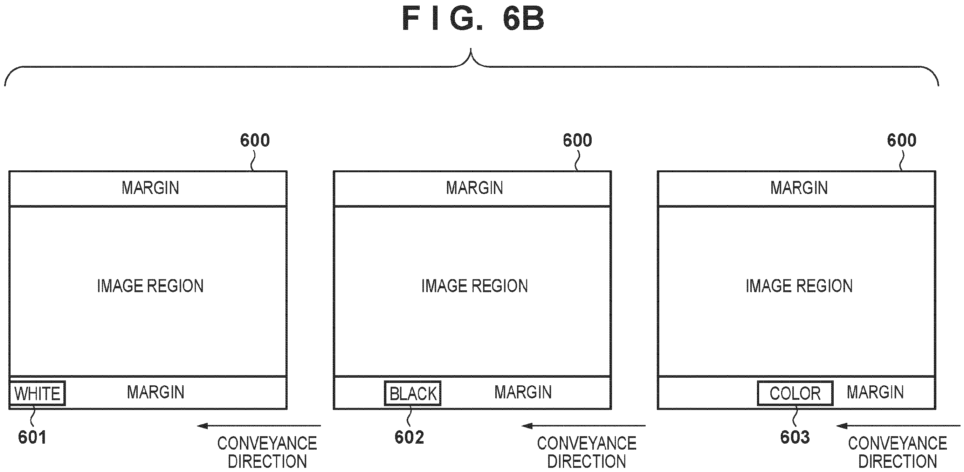

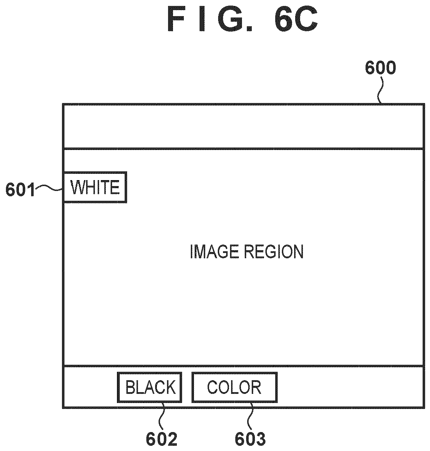

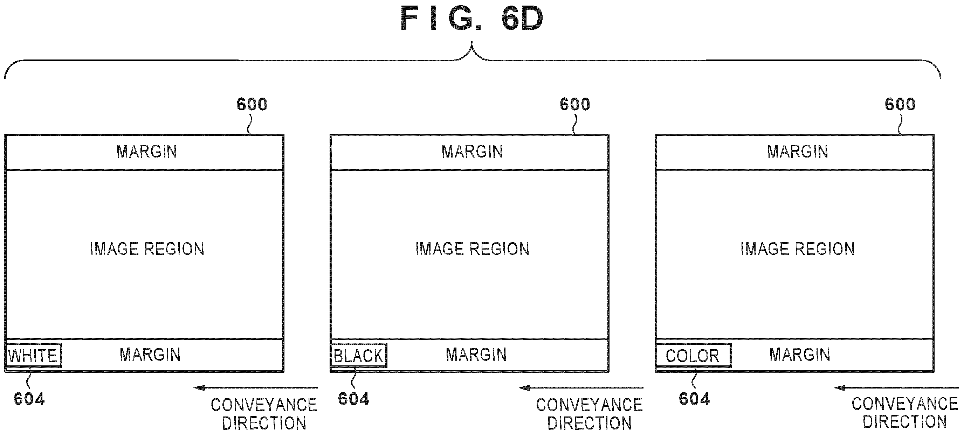

As shown in Fig. 6B, one detection pattern is printed at a fixed position associated with the color set for the detection pattern. The fixed position may be an arbitrary position outside the image region. Alternatively, as shown in Fig. 6C, a detection pattern of white may be printed at a preset fixed position in the image region. Each of Figs. 6B and 6C shows a case where a detection pattern is printed at a fixed position associated with the color of the detection pattern. By printing a detection pattern at a different fixed position in accordance with the color of the detection pattern, it is easier to execute control of creating a detection pattern. However, when analyzing the detection pattern, it is necessary to grasp the print position in accordance with the color of the detection pattern, thereby complicating control. In this case, as shown in Fig. 6D, a control unit 204 may print a detection pattern at one fixed position regardless of the color of the detection pattern.

As shown in Fig. 6D, a detection pattern is printed at the start position of a page indicated by a preset position 604 regardless of the color of the detection pattern. If white is set as the color of a detection pattern, a detection pattern of white is printed at the start position of a page. If black is set as the color of a detection pattern, a detection pattern of black is printed at the start position of a page. If a mixed color or a single color is set as the color of a detection pattern, a detection pattern of the color is printed at the start position of a page.

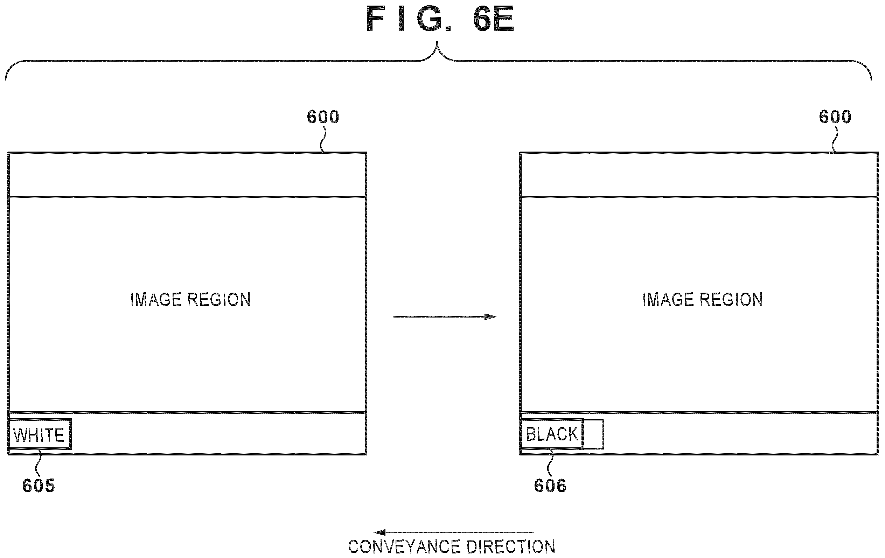

Fig. 6E is a view showing a state in which a white base is printed as the background of a detection pattern at a position 605, and a detection pattern of black is printed at a position 606 on the position 605. The white base background is printed first at the position 605 in a size larger than the detection pattern of black, and the detection pattern of black is printed at the position 606 thereon.

### [Fifth Embodiment]

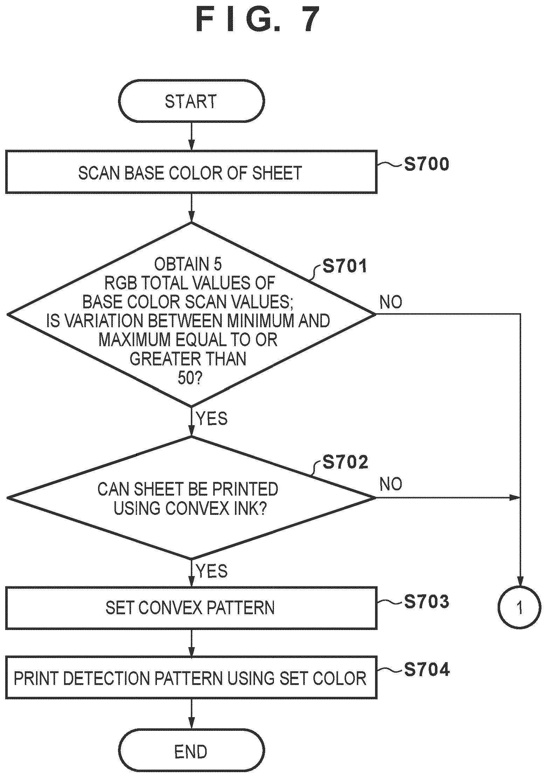

Fig. 7 is a flowchart of processing of scanning a base color of a print medium, determining the scanned base color, determining whether the print medium is a print medium printable by convex ink, and printing, in a case where the print medium is printable, a detection pattern by convex ink. This embodiment assumes that when printing on a roll sheet, the sheet is preset at the position of a scanner device 107. However, not only in a case of a roll sheet but also in a case of a cut sheet, this embodiment may be applied to various methods such as conveyance of only one sheet, a scan by a manual feed, and user setting. A print medium is not limited to the roll sheet described in this embodiment.

In step S700, an inspection unit 207 uses the scanner device 107 to scan the base color of a print medium, and obtains the RGB total value of base color scan values obtained by the scan. This embodiment assumes that the processing of step S700 is repeated five times. In step S701, a control unit 204 determines whether there is a variation equal to or greater than 50 between the maximum RGB total value and the minimum RGB total value among the RGB total values of the base color scan values obtained by the five scans. If the control unit 204 determines in step S701 that there is a variation equal to or greater than 50 between the maximum RGB total value and the minimum RGB total value, the control unit 204 determines in step S702 whether a print medium currently set in an image forming apparatus 100 is a print medium on which a detection pattern can be printed using convex ink.

A method of determining whether a print medium is a print medium on which a detection pattern can be printed using convex ink is not limited to a specific one. For example, for each type of print medium, a flag value indicating whether the type of the print medium is a print medium on which a detection pattern can be printed using convex ink is stored in advance in a storage unit 205. Then, if the flag value corresponding to the type of the print medium currently set in the image forming apparatus 100 indicates "a print medium on which a detection pattern can be printed using convex ink", the control unit 204 determines that the print medium is "a print medium on which a detection pattern can be printed using convex ink".

If the control unit 204 determines in step S702 that the print medium is a print medium printable by convex ink, the control unit 204 sets, as the color of a detection pattern, a convex ink color that can form a convex detection pattern. The convex ink is ultraviolet curing ink. In step S703, the control unit 204 sets a convex pattern as the shape of a detection pattern. In step S704, an image forming unit 202 prints the detection pattern in the set color of the detection pattern. If the control unit 204 determines in step S701 that the variation between the minimum RGB total value and the maximum RGB total value is smaller than 50, the process returns to step S301 of Fig. 3A to set the color of a detection pattern.

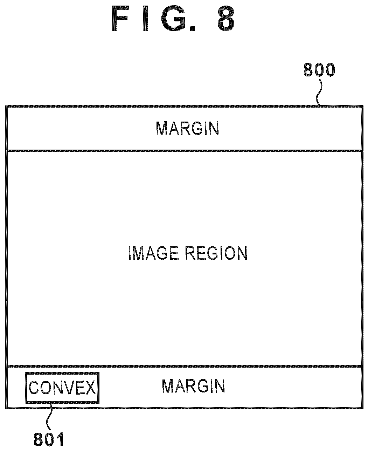

Fig. 8 is a view showing a method of printing, at a specific position, a detection pattern printed using convex ink. More specifically, Fig. 8 is a view showing a printing state 800 in which one page is printed in a case where there are an image region and margin regions on the left and right sides when printing on a roll sheet. If a convex ink color is set as the color of a detection pattern in step S703 described in the flowchart shown in Fig. 7, a detection pattern of the convex ink color is printed at the start position of a page indicated by a position 801.

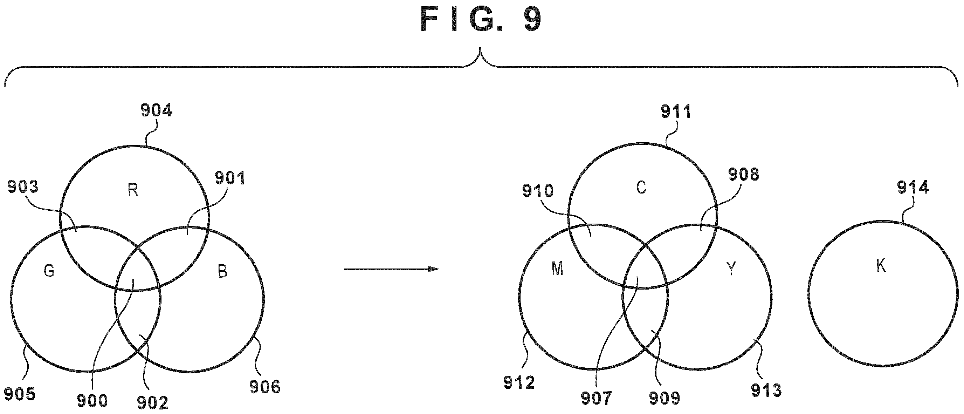

Fig. 9 is a view showing the relationship between an RGB color mode when scanning a base and a CMYK color mode when printing a detection pattern based on the base color. In a case where the control unit 204 determines that the scanned base color is a color of RGB values belonging to a region 900 (a region of a mixed color of R, G, and B), the control unit 204 sets, as the color of a detection pattern, a color of a K value or a color of CMY values belonging to a region 907 (a region of a mixed color of C, M, and Y). In a case where the control unit 204 determines that the base color is a color of RGB values belonging to a region 901 (a region of a mixed color of R and B), the control unit 204 sets, as the color of a detection pattern, a color of CMY values + K value belonging to a region 908 (a region of a mixed color of C and M). In a case where the control unit 204 determines that the base color is a color of RGB values belonging to a region 902 (a region of a mixed color of G and B), the control unit 204 sets, as the color of a detection pattern, a color of CMY values + K value belonging to a region 909 (a region of a mixed color of M and Y).

In a case where the control unit 204 determines that the base color is a color of RGB values belonging to a region 903 (a region of a mixed color of R and G), the control unit 204 sets, as the color of a detection pattern, a color of CMY values + K value belonging to a region 910 (a region of a mixed color of C and M). In a case where the control unit 204 determines that the base color is a color of RGB values belonging to a region 904 (a region of R), the control unit 204 sets, as the color of a detection pattern, a color of CMY values + K value belonging to a region 911 (a region of C). In a case where the control unit 204 determines that the base color is a color of RGB values belonging to a region 905 (a region of G), the control unit 204 sets, as the color of a detection pattern, a color of CMY values + K value belonging to a region 912 (a region of M). In a case where the control unit 204 determines that the base color is a color of RGB values belonging to a region 906 (a region of B), the control unit 204 sets, as the color of a detection pattern, a color of CMY values + K value belonging to a region 913 (a region of Y). In the above-described example, the control unit 204 sets to include a color of K in the color of a detection pattern. However, the use of a color of K is not essential, a pattern of a color of only C, M, and Y may be possible, and whether to use a color of K may be decided by determining the base color. The control unit 204 may be an external apparatus separated from the image forming apparatus 100, and may be, for example, a computer on a network.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An image forming apparatus comprising:
a first obtaining means configured to obtain first color values of a base color of a print medium by reading the print medium;
a second obtaining means configured to obtain second color values different from the first color values based on the first color values; and
a print means configured to print a mark of the second color values on the print medium.

2. The apparatus according to claim 1, wherein the second obtaining means obtains the second color values based on at least one of the color value of one color of the first color values, a difference between the color values of two colors of the first color values, and a total value of the color values of respective colors of the first color values.

3. The apparatus according to claims 1 or 2, wherein the second obtaining means decides the color value of each color of the second color values in accordance with a ratio of the color values of the respective colors of the first color values.

4. The apparatus according to any one of claims 1 to 3, wherein in a case where the total value of the color values of the respective colors of the first color values is smaller than a threshold and a print job uses white ink, the second obtaining means decides color values of white as the second color values.

5. The apparatus according to any one of claims 1 to 4, wherein
in a case where a difference between a maximum color value and a minimum color value of the first color values obtained by the first obtaining means a plurality of times is smaller than a threshold, the print means prints the mark of the second color values on the print medium, and
in a case where the difference is not smaller than the threshold, the print means prints, on the print medium, the mark obtained by superimposing a black object on a white object.

6. The apparatus according to any one of claims 1 to 5, wherein the print means prints the mark at a position corresponding to a color of the mark.

7. The apparatus according to any one of claims 1 to 6, wherein the print means prints the mark at a preset fixed position regardless of a color of the mark.

8. The apparatus according to any one of claims 1 to 7, wherein the print means prints the mark in a margin region on the print medium.

9. The apparatus according to any one of claims 1 to 8, wherein the print means prints a white mark in a print region on the print medium.

10. A control method for an image forming apparatus, comprising:
obtaining first color values of a base color of a print medium by reading the print medium;
obtaining second color values different from the first color values based on the first color values; and
printing a mark of the second color values on the print medium.

11. A program configured to cause a computer to function as each means of an image forming apparatus defined in any one of claims 1 to 9.
